# EUROPEAN PATENT APPLICATION

(11) **EP 2 271 008 A1**
(43) Date of publication of application: **05.01.2011**
(21) Application number: 09164252.0
(22) Date of filing: 30.06.2009
(51) Int. Cl.: H04H 60/51, H04H 40/18

(54) **Automatic configuration in a broadcast application apparatus**

(71) Applicant: NXP B.V., 5656 AG Eindhoven (NL)
(72) Inventor: Sedzin, Aliaksei Vladimirovich, 5656 AE Eindhoven (NL); de Waal, Klaas, 5656 AE Eindhoven (NL)
(74) Representative: Krott, Michel

(57) **Abstract**

The invention relates to a method of determining and applying configuration settings (CS) of a broadcast application apparatus (1) being connected to the internet (99) The method comprises: i) putting a request for geographical information (Loc) of the broadcast application apparatus (1) by submitting at least an externally visible IP address (9) to a geographical information server (4) on the internet (99); ii) receiving the geographical information (Loc) from the geographical information server (4); iii) determining location-specific settings (SL) of the broadcast application apparatus (1) based upon the geographical information (Loc), and iv) applying the configuration settings (CS) of the broadcast application apparatus (1) in conformity with the location-specific settings (SL). The invention provides for more user-friendliness, because a user does not need to specify where he is located. The invention further relates to a broadcast application apparatus for carrying out such method, and to a computer program product comprising instructions for causing a processor to perform such method.

## Description

### FIELD OF THE INVENTION

The invention relates to a method of determining and applying configuration settings of a broadcast application apparatus being connected to the internet. The invention further relates to a broadcast application apparatus for carrying out such method. The invention also relates to a computer program product comprising instructions for causing a processor to perform such method.

### BACKGROUND OF THE INVENTION

More and more consumer-electronics devices such as TV-sets and set-top-boxes are getting connected to the Internet. Typically such a TV-set gets a local network address from a router/modem; via the router/modem the Internet can be accessed. The router gets an IP address that is visible on the whole Internet. However, it is also possible that the consumer-electronics device is connected to the internet directly so that the consumer-electronics device gets an IP address that is visible on the whole internet. In this description the IP address that is visible on the whole internet is called the externally visible IP address.

KR102007035447A discloses a system and a method for providing an IPTV (Internet Protocol TV) medical information service linked with Internet broadcasting to offer an interactive IPTV medical information service. This is achieved by linking with the Internet broadcasting through an IP Set-Top Box (STB) and offering a customized medical information service based on a user location obtained from an IP address allocated to a respective IPTV.

WO2008/024833A2 discloses an IP television (IPTV) system, wherein a third party video content database is coupled to an IPTV network. The IPTV network includes a plurality of STB's. The third party video content database is mapped to the IPTV network via an IP address of the third party content database, and it is associated with an assigned channel on the IPTV network. One or more STB's of the IPTV network have access to the assigned channel.

### SUMMARY OF THE INVENTION

It is an object of the invention to provide a method of determining and applying settings of a broadcast application apparatus, which is more user-friendly than the existing methods

The invention is defined by the independent claims. The dependent claims define advantageous embodiments.

In a first aspect, the invention relates to a method of determining and applying configuration settings of a broadcast application apparatus being connected to the internet), wherein the method comprises:
- putting a request for geographical information of the broadcast application apparatus by submitting at least an externally visible IP address to a geographical information server on the internet;
- receiving the geographical information from the geographical information server;
- determining location-specific settings of the broadcast application apparatus based upon the geographical information, and
- applying the configuration settings of the broadcast application apparatus in conformity with the location-specific settings.

The invention is based on the insight that the first-time installation of broadcast application devices, such as a TV-set or a set-top-box, usually requires the consumer to go through a lot of menu's in which he has to select for example which language to use and in which place he lives. Based on this the broadcast application apparatus can make a guess on the frequency grid and the channel list. The inventors have realized that it is possible to have a very likely value for these choices already preselected as default values or even to skip the choice and use the automatically generated values. A first important ingredient to achieve this is the fact that today's broadcast application apparatuses often already have an internet connection, for example for offering internet browsing functionality to the user. Because of this the broadcast application apparatus is also provided with an external IP address. This may be realized directly (in case the device is provided with an internal modem and/or router unit) or indirectly via a router/modem unit that is used to connect the broadcast application apparatus to the internet in operational use. Nevertheless, many variations in obtaining internet connections are possible in this respect. In the first two steps of the method in accordance with the invention, the externally visible IP address is used to obtain geographical information. There are web services (offered on web-sites such as www.maxmind.com) that give you geographical information based on the IP address. Subsequently this information is used to determine various different user specific settings, such as physical location (country, region, city, etc), language, frequency tables and/or channel tables. In contrast with the known broadcast application apparatus the consumer does not need to specify this data manually and the broadcast application apparatus is able to set its defaults automatically.

In an embodiment of the method in accordance with the invention the geographical information comprises at least one of a group comprising: country, region, area code, metro code, city, zipcode, latitude, longitude, internet service provider, organization, and domain name. Any one of these location properties can be used to obtain information about the location of the broadcast application apparatus.

In an embodiment of the method in accordance with the invention the location-specific settings and the configuration settings comprise at least one of a further group comprising: time zone, language, channel table, frequency table, and network ID. These are the most common settings which are generally configured at a first start-up of a broadcast application apparatus.

An embodiment of the method in accordance with the invention comprises, before the applying of the configuration settings, i) presenting a user of the broadcast application apparatus with the geographical information obtained from the geographical information server, and ii) requesting confirmation from the user that the geographical information is correct, wherein the applying of the configuration settings is only carried out if the geographical information is confirmed by the user. This embodiment provides for a higher robustness of the system, because the user is able to intervene in case of a wrong automatic determination of the geographical information of the broadcast application apparatus.

In an embodiment of the method in accordance with the invention the geographical information is obtained from input of the user if the user did not acknowledge geographical information that was obtained from the internet, where after the applying of the configuration settings is done in conformity with the location-specific settings obtained from the user input. This embodiment conveniently enables the user to specify the geographical information in case the automatic determination has failed.

In an embodiment of the method in accordance with the invention the configuration settings are stored in a storage unit.

In an embodiment of the method in accordance with the invention the determining of the location-specific settings is done by one of: i) retrieving the location-specific settings from a location-specific settings server on the internet, and ii) retrieving the location-specific settings from a further storage unit in the broadcast application apparatus. This embodiment comprises two attractive variations of obtaining the location-specific settings.

In an embodiment of the method in accordance with the invention the putting of the request for geographical information to a geographical information server and the receiving of the geographical information is supported by a proxy server. The use of a proxy server (which can be considered as forming part of the internet) is very convenient. First of all, the proxy server can determine how exactly to get the geographical information. Second, the proxy server can be used to change the format of the geographical information such that the broadcast application apparatus can easily process it. And third, the proxy server can hide changes that may take place in the geographical information websites, which improves the durability and reliability of the method.

In an embodiment of the method in accordance with the invention the broadcast application apparatus comprises at least one of a television, a radio, a photo frame, a content recorder, and a set-top box. These are examples of a broadcast application apparatus in accordance with the definition used in this description. However, these terms must be interpreted broadly, i.e. to include internet television, internet radio, etc.

In a second aspect, the invention relates to a broadcast application apparatus for carrying out the method in accordance with the invention.

An embodiment of the broadcast application apparatus in accordance with the invention comprises:
- an internet access terminal for connecting to the internet
- a geographical information request unit for putting a request for:
   i) geographical information of the broadcast application apparatus by submitting at least an externally visible IP address to a geographical information server on the internet, and for
   ii) receiving the geographical information from the geographical information server;
- a settings determination unit for determining location-specific settings of the broadcast application apparatus based upon the geographical information, and
- a configuration unit for applying the configuration settings of the broadcast application apparatus in conformity with the location-specific settings.

An embodiment of the broadcast application apparatus in accordance with the invention comprises a storage unit for storing the configuration settings.

An embodiment of the broadcast application apparatus in accordance with the invention comprises a further storage unit for storing the location-specific settings.

In an embodiment of the broadcast application apparatus in accordance with the invention, the broadcast application apparatus comprises at least one of a television, a radio, a photo frame, a content recorder, and a set-top box.

In a third aspect, the invention relates to a computer program product comprising instructions for causing a processor to perform the method in accordance with the invention.

These and other aspects of the invention are apparent from and will be elucidated with reference to the embodiments described hereinafter.

### BRIEF DESCRIPTION OF THE DRAWINGS

In the drawings:
Fig. 1 shows aspects of the operational use of the broadcast application apparatus in accordance with the invention;
Fig. 2 shows a possible implementation of the broadcast application apparatus of Fig. 1, and
Fig. 3 shows a flow diagram of embodiments of the method in accordance with the invention.

### List of reference numerals:

- 1: Broadcast application apparatus (e.g. TV, set-top box)
- 2: modem/network router
- 3: proxy website (server)
- 4: plurality of geographical information websites (servers)
- 5: boundary between home and internet
- 9: externally visible IP address
- Loc: geographical information (based on IP address)
- SL: location-specific settings (values)
- CS: configuration settings (used by apparatus)
- 10: internet interface
- 20: configuration software module
- 30: application software
- 40: storage unit (for storing configuration settings)
- 60: further storage unit (for storing location-specific settings)
- 99: internet (including geographical information servers/websites)
- 100: first step (check for first start-up)
- 110: second step (geographical information determination using internet)
- 120: third step (present geographical information to user) (optional)
- 130: fourth step (ask confirmation of geographical) (optional)
- 140: fifth step (determine location-specific settings corresponding with geographical information)
- 150: Sixth step (set defaults based upon geographical information)
- 200: Normal operation mode of broadcast application apparatus
- 300: Manual configuration mode (optional)

### DETAILED DESCRIPTION OF THE PREFERRED EMBODIMENT

The invention aims at providing a method of determining and applying configuration settings of a broadcast application apparatus, which is more user-friendly. This effect is achieved by exploiting an internet connection for automatic configuration using location-specific settings. The location of the broadcast application apparatus is determined from geographical information which is obtained, at request, from a geographic information server. In order to obtain this geographic information an IP address is to be submitted to the geographic information server. When the location of the broadcast application apparatus is known, location-specific settings can be obtained (from a server or a look-up storage unit) and used for auto-configuration of the broadcast application apparatus. The invention further aims at providing a broadcast application apparatus for carrying out the method of the invention. The invention also aims at providing a computer program product comprising instructions for causing a processor to perform the method of the invention. The invention eliminates (or at least strongly reduces) the need for user input when the apparatus is switched on for the first time. In an embodiment confirmation may be asked from the user before the auto-configuration is completed.

In order to facilitate the discussion of the detailed embodiments a few expressions are defined hereinafter.

Throughout this description the term "broadcast application apparatus" is used. This term is to be interpreted as an apparatus which is specifically designed for receiving broadcasted video/audio information. This includes a television, a radio, a photoframe, a content recorder having a tuner, and a set-top box. The broadcasting may be done wireless and wired. It may be done through internet, and other networks. Examples of broadcasting applications are existing analog or digital cable TV applications.

Throughout this description the term "connected to internet" is used. This is to be interpreted as including all possible manners of connecting a device to the internet, i.e. all wireless (e.g. WIFI) and wired techniques (e.g. Ethernet, ADSL, Cable).

Throughout this description the term "channel table" is used. This is to be interpreted as a table containing all data that is needed to select a channel, such as channel(tuner) frequency, service ID and channel name.

Throughout this description the term "frequency table" is used. This is to be interpreted as a table containing the frequencies and modulation parameters of the broadcast channels available locally.

Throughout this description the term "network ID" is used. This is to be interpreted as the identification of a Network Information Table, as defined in the ETSI EN 300 468, which is the specification for Service Information in DVB systems. The network ID is needed to select the correct Network Information Table for your area from the multitude of Network Information Tables that can be present in the digital broadcast signal.

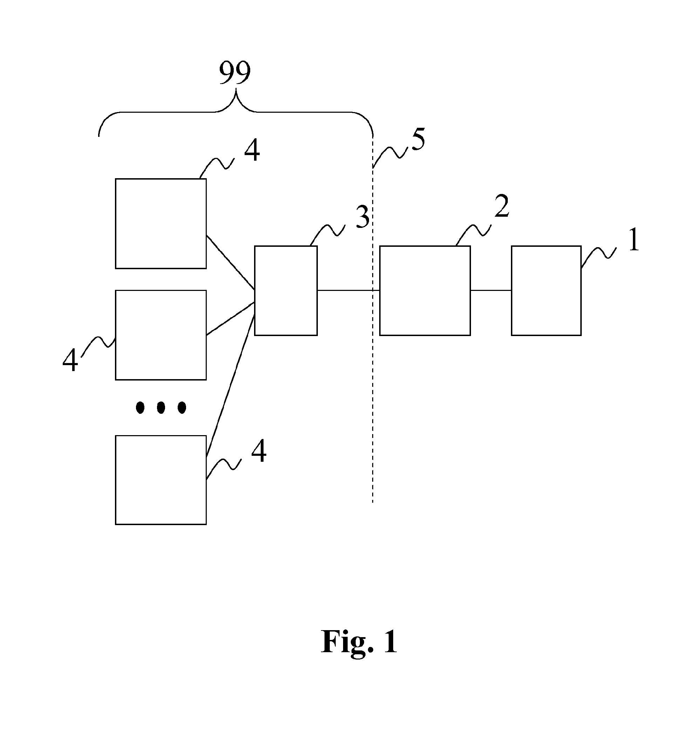

Fig. 1 shows aspects of the operational use of the broadcast application apparatus in accordance with the invention. The broadcast application apparatus 1 is configured for accessing a geographical information website 4 (server) via the (optional) modem/network router 2 and the (optional) proxy website 3 (server) thereby exposing its IP-address or the IP-address of the (optional) modem/network router 2. An example of such geographical information website 4 is www.maxmind.com. The geographical information which is provided by this website comprises at least one of a group comprising: country, region, area code, metro code, city, zipcode, latitude, longitude, internet service provider, organization, and domain name. The geographical information website 4 determines the geographical location of the broadcast application apparatus 1 or the network router 2 and sends this information via the proxy website 3 and the network router 2 to the broadcast application apparatus 1. The broadcast application apparatus 1 is configured for interpreting the geographical information and for using it to determine the configuration settings of the device (e.g. the time zone, the country, the language, frequency tables and possibly channel tables) so that the consumer does not need to input or select these manually.

The advantage of having the proxy website 3 between the plurality of geographical information websites 4 and the broadcast application apparatus 1 is that the proxy website 3 can be used to determine how exactly to get the actual geographical information, and also it is possible to format the information such that the broadcast application apparatus 1 can process it more easily. Moreover, the proxy website 3 may hide changes that take place in the plurality of geographical information websites 4 from the broadcast application apparatus 1. The latter feature improves the durability and reliability. The broadcast application apparatus 1 may be designed to contact the same proxy website (which may be set-up and hosted by the manufacturer of the broadcast application apparatus). If the location (e.g. URL) of the geographic information servers 4 changes, this only needs to be registered in the proxy server 3.

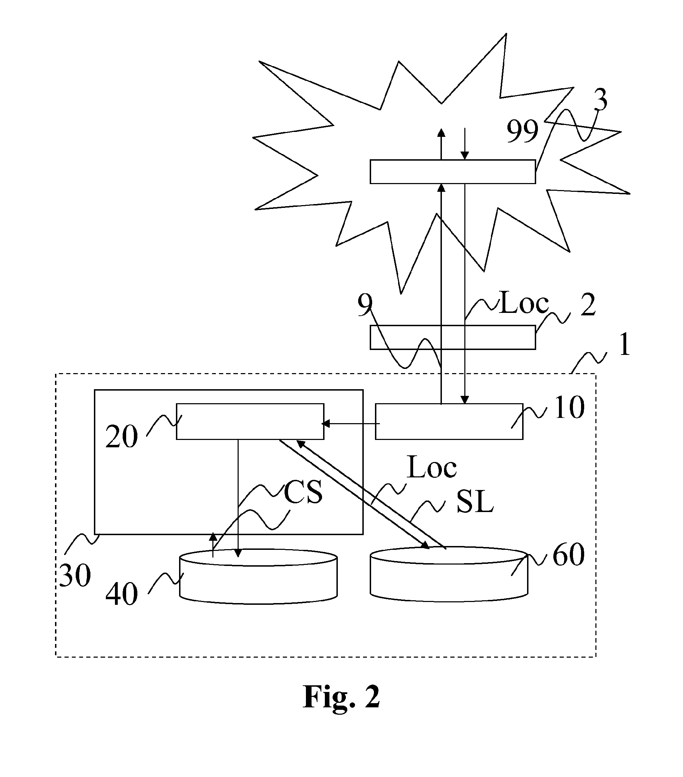

Fig. 2 shows a possible implementation of the broadcast application apparatus of Fig. 1. The figure is discussed in as far as it specifies more information than Fig. 1. The broadcast application apparatus 1 comprises an internet interface 10. The internet interface 10 provides for the communication with the internet 99 (in this example through the modem/router 2 and optionally the proxy server 3). The broadcast application apparatus 1 further comprises application software 30. The application software 30 comprises a configuration software module 20. The application software module 20 is configured for accessing the internet 99 via the internet interface 10 (which can be wired (Ethernet) or wireless (Wi-Fi). The configuration software module 20 is configured for requesting information about the geographical location Loc from the proxy website 3. The proxy website 3, in its turn, derives the geographical information Loc of the broadcast application apparatus 1 from the externally visible IP address (9). The proxy website 3 may use its own database, or use geographical information web site 4 (in Fig. 1) that can translate an IP address into a location.

In an alternative embodiment the configuration software module 20 could also be configured to directly access any geographical information website 4 on the internet 99 to get the geographical information Loc.

Once the geographical information Loc is known to the configuration software module 20, the module can look up the location-specific settings SL corresponding with the geographic information Loc in a further storage unit 60. It must be noted that the further storage unit 60 can also be located elsewhere, for example on the proxy website 3. The configuration settings CS of the broadcast application apparatus 1 are configured in accordance with the location-specific settings SL. The configuration settings SL are stored in a storage unit 40. In operational use of the broadcast application apparatus 1, the application software 30 obtains information about the configuration settings CS (time zone, language, channel table (channel grid), frequency table (frequency grid), network ID, etc.) from the storage unit 40.

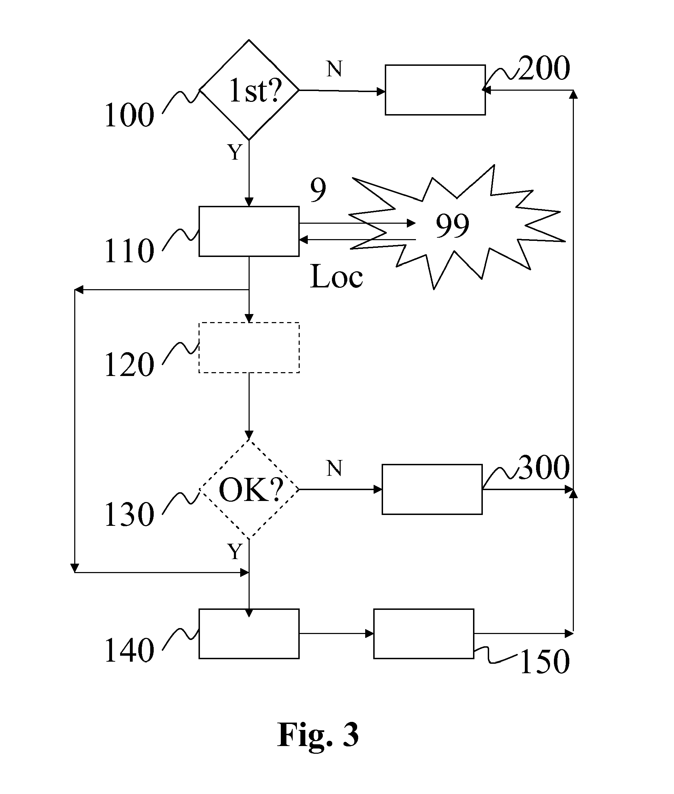

Fig. 3 shows a flow diagram of embodiments of the method in accordance with the invention. The flow diagram presents steps which are performed by the broadcast application apparatus 1 when it is switched on. In a first step 100 it is checked whether the apparatus 1 is switched on for the first time (first start-up). If it is not the first time, the apparatus 1 switches to a normal operation mode 200. If it is the first time, a second step 110 is carried out in which the geographical information Loc is determined (request on internet 99 submitting the externally visible IP address (9) as discussed earlier). There after, a third step 120 is carried out in which the user of the apparatus 1 is presented with the geographical information Loc. In a fourth step 130 the user is requested to confirm whether he/she agrees with the geographical information Loc. If the user does not agree a manual configuration mode 300. After the manual configuration mode 300 the apparatus 1 can switch to the normal operation mode 200. If the user agrees with the presented geographical information Loc a fifth step 140 is carried out, in which the location-specific settings are determined which correspond with the geographical information Loc. In a sixth step 150 the configuration settings are configured in accordance with the location-specific settings.

It must be noted that the third step 120, the fourth step 130, and the manual configuration mode 300 are optional. However, these steps render the apparatus more reliable, because the user may intervene in case the automatic configuration went wrong. It must also be noted that order in the steps illustrated in Fig. 3 may be changed without affecting the end result. Also, other steps may be inserted between the steps which are illustrated. Furthermore, it must be noted that the embodiments given in Figs. 1 to 3 are representing possible implementations of the invention. Many variations are possible. Blocks and units presented in the figures may be implemented in hardware or software or combinations of both.

The invention provides a method of determining and applying configuration settings CS of a broadcast application apparatus 1 being connected to the internet 99. The method comprises: i) putting a request for geographical information Loc of the broadcast application apparatus 1 by submitting at least the externally visible IP address 9 to a geographical information server 4 on the internet 99; ii) receiving the geographical information Loc from the geographical information server 4; iii) determining location-specific settings SL of the broadcast application apparatus 1 based upon the geographical information Loc, and iv) applying the configuration settings CS of the broadcast application apparatus 1 in conformity with the location-specific settings SL. The invention provides for more user-friendliness, because a user does not need to specify where he is located. The invention further provides a broadcast application apparatus for carrying out such method, and a computer program product comprising instructions for causing a processor to perform such method.

The invention may be applied in various application areas. For example, the invention may be applied in (integrated) digital TV receivers and set-top boxes.

Various variations of the system and method in accordance with the invention are possible and do not depart from the scope of the invention as claimed.

It will be appreciated that the invention also extends to computer programs, particularly computer programs on or in a carrier, adapted for putting the invention into practice. The program may be in the form of source code, object code, a code intermediate source and object code such as partially compiled form, or in any other form suitable for use in the implementation of the method according to the invention. It will also be appreciated that such a program may have many different architectural designs. For example, a program code implementing the functionality of the method or system according to the invention may be subdivided into one or more subroutines. Many different ways to distribute the functionality among these subroutines will be apparent to the skilled person. The subroutines may be stored together in one executable file to form a self-contained program. Such an executable file may comprise computer executable instructions, for example processor instructions and/or interpreter instructions (e.g. Java interpreter instructions). Alternatively, one or more or all of the subroutines may be stored in at least one external library file and linked with a main program either statically or dynamically, e.g. at run-time. The main program contains at least one call to at least one of the subroutines. Also, the subroutines may comprise function calls to each other. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the means of at least one of the systems and/or products set forth. These instructions may be subdivided into subroutines and/or be stored in one or more files that may be linked statically or dynamically.

The carrier of a computer program may be any entity or device capable of carrying the program. For example, the carrier may include a storage medium, such as a ROM, for example a CD ROM or a semiconductor ROM, or a magnetic recording medium, for example a floppy disc or hard disk. Further the carrier may be a transmissible carrier such as an electrical or optical signal, which may be conveyed via electrical or optical cable or by radio or other means. When the program is embodied in such a signal, the carrier may be constituted by such cable or other device or means. Alternatively, the carrier may be an integrated circuit in which the program is embedded, the integrated circuit being adapted for performing, or for use in the performance of, the relevant method.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage. Throughout the Figures, similar or corresponding features are indicated by same reference numerals or labels.

## Claims

1. A method of determining and applying configuration settings (CS) of a broadcast application apparatus (1) being connected to the internet (99)), the method comprising:
- putting a request for geographical information (Loc) of the broadcast application apparatus (1) by submitting at least an externally visible IP address (9) to a geographical information server (4) on the internet (99);
- receiving the geographical information (Loc) from the geographical information server (4);
- determining location-specific settings (SL) of the broadcast application apparatus (1) based upon the geographical information (Loc), and
- applying the configuration settings (CS) of the broadcast application apparatus (1) in conformity with the location-specific settings (SL).

2. The method as claimed in claim 1, wherein the geographical information (Loc) comprises at least one of a group comprising: country, region, area code, metro code, city, zipcode, latitude, longitude, internet service provider, organization, and domain name.

3. The method as claimed in claim 1 or 2, wherein the location-specific settings and the configuration settings comprise at least one of a further group comprising: time zone, language, channel table, frequency table, and network ID.

4. The method as claimed in any one of the preceding claims, further comprising, before the applying of the configuration settings, i) presenting a user of the broadcast application apparatus (1) with the geographical information (Loc) obtained from the geographical information server, and ii) requesting confirmation from the user that the geographical information is correct, wherein the applying of the configuration settings (CS) is only carried out if the geographical information (Loc) is confirmed by the user.

5. The method as claimed in claim 4, wherein the geographical information (Loc) is obtained from input of the user if the user did not acknowledge geographical information (Loc) that was obtained from the internet (99), where after the applying of the configuration settings (CS) is done in conformity with the location-specific settings (SL) obtained from the user input.

6. The method as claimed in any one of the preceding claims, wherein the configuration settings (CS) are stored in a storage unit (40).

7. The method as claimed in any one of the preceding claims, wherein the determining of the location-specific settings (SL) is done by one of: i) retrieving the location-specific settings from a location-specific settings server (3) on the internet (99), and ii) retrieving the location-specific settings from a further storage unit (60) in the broadcast application apparatus (1).

8. The method as claimed in any one of the preceding claims, wherein the putting of the request for geographical information (Loc) to a geographical information server (4) and the receiving of the geographical information (Loc) is supported by a proxy server (3).

9. The method as claimed in any one of the preceding claims, wherein the broadcast application apparatus comprises at least one of a television, a radio, a photo frame, a content recorder, and a set-top box.

10. A broadcast application apparatus for carrying out the method as claimed in any one of the claims 1 to 9.

11. The broadcast application apparatus as claimed in claim 10, the apparatus comprising:
- an internet access terminal for connecting to the internet (99)
- a geographical information request unit (20) for putting a request for:
i) geographical information (Loc) of the broadcast application apparatus (1) by submitting at least an externally visible IP address (9) to a geographical information server (4) on the internet (99), and for
ii) receiving the geographical information (Loc) from the geographical information server (4);
- a settings determination unit (3, 20, 60) for determining location-specific settings (SL) of the broadcast application apparatus (1) based upon the geographical information (Loc), and
- a configuration unit (30) for applying the configuration settings (CS) of the broadcast application apparatus (1) in conformity with the location-specific settings (SL).

12. The broadcast application apparatus as claimed in claim 11, further comprising a storage unit (40) for storing the configuration settings (CS).

13. The broadcast application apparatus as claimed in claim 11 or 12, further comprising a further storage unit (60) for storing the location-specific settings (SL).

14. The broadcast application apparatus as claimed in claimed in any one of claims 10 to 13, the broadcast application apparatus comprising at least one of: a television, a radio, a photo frame, a content recorder, and a set-top box.

15. A computer program product comprising instructions for causing a processor to perform the method according to any one of claims 1 to 9.

## Amended claims

### Amended claims in accordance with Rule 137(2) EPC.

**1.** A method for auto-configuration during first-time installation of a broadcast application apparatus (1) that is connected to the internet (99), the auto-configuration comprising automatically determining and applying configuration settings (CS) of the broadcast application apparatus (1), the method comprising:
- automatically putting a request for geographical information (Loc) of the broadcast application apparatus (1) by submitting at least an externally visible IP address (9) to a geographical information server (4) on the internet (99);
- receiving the geographical information (Loc) from the geographical information server (4);
- automatically determining location-specific settings (SL) of the broadcast application apparatus (1) based upon the geographical information (Loc), and
- applying the configuration settings (CS) of the broadcast application apparatus (1) in conformity with the location-specific settings (SL).

**2.** The method as claimed in claim 1, further comprising, before the automatically putting of the request, checking if the broadcast application apparatus is switched on for the first time.

**3.** The method as claimed in claim 1 or 2, wherein the geographical information (Loc) comprises at least one of a group comprising: country, region, area code, metro code, city, zipcode, latitude, longitude, internet service provider, organization, and domain name.

**4.** The method as claimed in claim 1, 2, or 3, wherein the location-specific settings and the configuration settings comprise at least one of a further group comprising: time zone, language, channel table, frequency table, and network ID.

**5.** The method as claimed in any one of the preceding claims, further comprising, before the applying of the configuration settings, i) presenting a user of the broadcast application apparatus (1) with the geographical information (Loc) obtained from the geographical information server, and ii) requesting confirmation from the user that the geographical information is correct, wherein the applying of the configuration settings (CS) is only carried out if the geographical information (Loc) is confirmed by the user.

**6.** The method as claimed in claim 5, wherein the geographical information (Loc) is obtained from input of the user if the user did not acknowledge geographical information (Loc) that was obtained from the internet (99), where after the applying of the configuration settings (CS) is done in conformity with the location-specific settings (SL) obtained from the user input.

**7.** The method as claimed in any one of the preceding claims, wherein the automatically determining of the location-specific settings (SL) is done by one of: i) retrieving the location-specific settings from a location-specific settings server (3) on the internet (99), and ii) retrieving the location-specific settings from a further storage unit (60) in the broadcast application apparatus (1).

**8.** The method as claimed in any one of the preceding claims, wherein the automatically putting of the request for geographical information (Loc) to a geographical information server (4) and the receiving of the geographical information (Loc) is supported by a proxy server (3).

**9.** The method as claimed in any one of the preceding claims, wherein the broadcast application apparatus comprises at least one of a television, a radio, a photo frame, a content recorder, and a set-top box.

**10.** A broadcast application apparatus for carrying out the method as claimed in any one of the claims 1 to 9.

**11.** The broadcast application apparatus as claimed in claim 10, the apparatus comprising:
- an internet access terminal for connecting to the internet (99)
- a geographical information request unit (20) for:
i) automatically putting a request for geographical information (Loc) of the broadcast application apparatus (1) by submitting at least an externally visible IP address (9) to a geographical information server (4) on the internet (99), and for
ii) receiving the geographical information (Loc) from the geographical information server (4);
- a settings determination unit (3, 20, 60) for automatically determining location-specific settings (SL) of the broadcast application apparatus (1) based upon the geographical information (Loc), and
- a configuration unit (30) for applying the configuration settings (CS) of the broadcast application apparatus (1) in conformity with the location-specific settings (SL).

**12.** The broadcast application apparatus as claimed in claim 11, further comprising a storage unit (40) for storing the configuration settings (CS).

**13.** The broadcast application apparatus as claimed in claim 11 or 12, further comprising a further storage unit (60) for storing the location-specific settings (SL).

**14.** The broadcast application apparatus as claimed in claimed in any one of claims 10 to 13, the broadcast application apparatus comprising at least one of: a television, a radio, a photo frame, a content recorder, and a set-top box.

**15.** A computer program product comprising instructions for causing a processor to perform the method according to any one of claims 1 to 9.
